# EUROPÄISCHE PATENTSCHRIFT

(11) **EP 3 571 431 B1**
(45) Veröffentlichungstag und Bekanntmachung des Hinweises auf die Patenterteilung: **01.09.2021**
(21) Anmeldenummer: 18703903.7
(22) Anmeldetag: 18.01.2018
(51) Int. Cl.: F16K 27/02, F16K 31/06

(54) **VENTIL**
VALVE
VANNE

(30) Priorität: 19.01.2017 DE 102017000446
(43) Veröffentlichungstag der Anmeldung: 27.11.2019
(73) Patentinhaber: Staiger GmbH & Co. KG, 74391 Erligheim (DE)
(72) Erfinder: STAIGER, Marc, 71634 Ludwigsburg (DE); KOFINK, Peter, 74182 Obersulm (DE); SCHOCH, Klaus, 74388 Talheim (DE)
(74) Vertreter: Kordel, Mattias
(86) Internationale Anmeldenummer: PCT/EP2018/051156
(87) Internationale Veröffentlichungsnummer: WO 2018/134283

(56) Entgegenhaltungen:
- EP-A2- 2 561 197
- DE-A1- 10 340 941
- DE-A1-102006 012 530
- DE-U1- 20 120 608
- DE-U1-202008 015 377
- DE-U1-202015 004 290
- US-A1- 2006 017 034

## Beschreibung

Die Erfindung betrifft ein Ventil mit den Merkmalen des Oberbegriffs des Anspruchs 1.

Die DE 10 2006 012 530 B4 offenbart ein Ventil, dessen Magnetkopf zwischen einem Innenkern und einem Außenkern einen nicht magnetisierbaren Trennring aufweist, der an der dem Plattenanker zugewandten Seite zurückgesetzt ist. Die Anordnung ist so getroffen, dass bei aktiviertem Magnetkopf die dem Plattenanker zugehörige Ankerscheibe ausschließlich mit einer schmalen Randfläche ihrer dem Magnetkopf zugewandten Oberseite an einer Stirnfläche des Außenkerns anschlägt. Dadurch tritt in diesem schmalen Berührungsbereich eine verhältnismäßig hohe Beanspruchung auf, die insbesondere bei hoher Schalthäufigkeit des Ventils zu Materialverschleiß und Funktionsstörungen führen kann.

Die DE 20 2015 004290 U1 offenbart ein Ventil mit den Merkmalen des Oberbegriffs des Anspruchs 1.

Die Aufgabe der Erfindung besteht darin, ein Ventil dieser Art dahingehend weiterzubilden, dass die vorbeschriebenen Nachteile weitgehend vermieden werden und mit einfachen Mitteln ein großflächiger Anschlag des Magnetankers sowie eine dauerhaft zuverlässige Funktionstüchtigkeit erzielt wird.

Diese Aufgabe wird erfindungsgemäß durch die Merkmale des Anspruchs 1 gelöst. Zweckmäßige Ausgestaltungen und Weiterbildungen der Erfindung sind durch die Merkmale der Unteransprüche gekennzeichnet.

Vorzugsweise bilden eine mit der Ankerscheibe korrespondierende Stirnfläche des Außenkerns und ein der Ankerscheibe zugewandter Stirnseitenteil des Trennrings in ein und derselben Ebene eine Anschlagfläche.

Vorzugsweise ist die der Ankerscheibe zugewandte Stirnwand des Innenkerns auf Abstand zur Ebene der Anschlagfläche zurückgesetzt.

Gemäß einer Weiterbildung der Erfindung ist vorgesehen, dass der Trennring eine Bodenwand und eine Ringwand aufweist, wobei das dem Plattenanker zugewandte Ende des Innenkerns in dem Trennring derart - vorzugsweise formschlüssig - gelagert ist, dass die Stirnwand des Innenkerns von der Bodenwand übergriffen ist. Dabei ist die der Ankerscheibe zugewandte Fläche der Bodenwand des Trennrings vorzugsweise in der Ebene der Stirnfläche des Außenkerns und des Stirnseitenteils der Ringwand angeordnet und bildet die Anschlagfläche mit. Auf diese Weise wird zugleich der Innenkern mechanisch geschont, und es wird eine durch die Bodenwand vorteilhaft weiter vergrößerte Anschlagfläche bereitgestellt, sodass ein besonders großflächiger Anschlag des Magnetankers und eine besonders zuverlässige, dauerhafte Funktionstüchtigkeit gegeben sind.

Gemäß einer Weiterbildung der Erfindung ist vorgesehen, dass die Stirnwand des Innenkerns an der Bodenwand des Trennrings anliegt. Dies ist einerseits eine besonders bauraumsparende Ausgestaltung, andererseits wird die Bodenwand durch die an ihr anliegende Stirnwand des Innenkerns vorteilhaft stabilisiert.

Gemäß einer Weiterbildung der Erfindung ist vorgesehen, dass in einem - radialen - Berührungsbereich zwischen dem Trennring und dem Innenkern eine axiale Freistellung ausgebildet ist, die eine relativ zu der Anschlagfläche axial - in Richtung des Magnetkopfs - zurückgesetzte Schweißfläche aufweist.

Alternativ oder zusätzlich ist vorzugsweise in einem - radialen - Berührungsbereich zwischen dem Trennring und dem Außenkern eine axiale Freistellung ausgebildet, die eine relativ zu der Anschlagfläche axial - in Richtung des Magnetkopfs - zurückgesetzte Schweißfläche aufweist.

Besonders bevorzugt ist sowohl in einem ersten Berührungsbereich zwischen dem Trennring und dem Innenkern als auch in einem zweiten Berührungsbereich zwischen dem Trennring und dem Außenkern jeweils eine axiale Freistellung ausgebildet, die eine relativ zu der Anschlagfläche axial - in Richtung auf den Magnetkopf - zurückgesetzte Schweißfläche aufweist.

Unter dem Begriff "zurückgesetzt" wird insbesondere verstanden, dass eine Fläche relativ zu der Anschlagfläche in Richtung des Magnetkopfs, insbesondere in Richtung auf die Magnetspule zu, entlang einer Längs- oder Mittenachse des Ventils versetzt angeordnet ist.

Die wenigstens eine axiale Freistellung erstreckt sich vorzugsweise in axialer Richtung - das heißt insbesondere entlang der Längs- oder Mittenachse des Ventils gesehen - über einen Bereich, der kleiner ist als eine axiale Erstreckung des Trennrings, insbesondere kleiner als eine axiale Erstreckung des ersten Berührungsbereichs und/oder des zweiten Berührungsbereichs.

Somit wird der wenigstens eine Berührungsbereich durch die wenigstens eine axiale Freistellung zwar in axialer Richtung gesehen effektiv verkürzt, jedoch nicht beseitigt.

Mittels der wenigstens einen zurückgesetzten Schweißfläche wird eine axial zurückgesetzte Schweißverbindung ermöglicht, die ohne Zusatzwerkstoff und zugleich ohne Nacharbeit auskommt. Mittels einer definiert gestalteten Schweißgeometrie ist es möglich, auch mit stark reduzierter Energiezufuhr - beispielsweise mittels Laserstrahl - sehr genau und definiert zu schweißen. Die stark reduzierte Energiezufuhr gewährleistet dabei einen sehr geringen Wärmeeintrag, wodurch ein Wärmeverzug weitestgehend vermieden wird. Die Stirnflächen, insbesondere die Anschlagfläche, muss nach dem Verschweißen des Trennrings mit dem Innenkern und/oder dem Außenkern nicht mehr nachbearbeitet werden, sodass sie mit geringem Aufwand sehr präzise gefertigt werden kann.

Der Berührungsbereich zwischen dem Trennring und dem Außenkern ist bevorzugt ein Berührungsbereich zwischen dem Trennring und einem Innenbund des Außenkerns. Der Trennring liegt also vorzugsweise insbesondere einerseits an dem Innenbund des Außenkerns und andererseits an dem Innenkern berührend an.

Unter einem Berührungsbereich wird allgemein ein Bereich verstanden, in dem der Trennring in berührendem Kontakt mit einem anliegenden, unmittelbar benachbarten Element, insbesondere mit dem Innenkern oder mit dem Außenkern, ist. Insbesondere kann der Berührungsbereich - vorzugsweise konzentrische - Anlageflächen einerseits des Trennrings und andererseits des benachbarten Bauteils, insbesondere des Innenkerns und/oder des Außenkerns, aufweisen, wobei die Anlageflächen der verschiedenen Bauteile aneinander flächig anliegen. Die Anlageflächen sind vorzugsweise kreiszylindrisch ausgebildet.

Die Anschlagfläche ist insbesondere im Bereich der wenigstens einen axialen Freistellung unterbrochen. Da die axiale Freistellung jedoch - in radialer Richtung gesehen - eine nur geringe Ausdehnung aufweisen kann, schadet dies der großflächigen Ausgestaltung der Anschlagfläche nicht oder höchstens kaum, wobei zugleich die zuvor erwähnten Vorteile in Verbindung mit der Befestigung des Trennrings an den benachbarten Bauteilen erzielt werden.

Die Anschlagfläche ist vorzugsweise auch relativ zu der Stirnwand des Innenkerns zurückgesetzt, die ihrerseits vorzugsweise relativ zu der Anschlagfläche zurückgesetzt ist.

Gemäß einer Weiterbildung der Erfindung ist vorgesehen, dass die wenigstens eine axiale Freistellung als Freidrehung ausgebildet ist. Auf diese Weise kann die axiale Freistellung besonders einfach, präzise und kostengünstig hergestellt werden, insbesondere als zu der Mittenachse konzentrische Freidrehung.

Alternativ oder zusätzlich ist die wenigstens eine axiale Freistellung bevorzugt als Ringnut, insbesondere als zur Mittenachse konzentrische Ringnut, ausgebildet. Dies stellt ebenfalls eine besonders einfache und darüber hinaus geometrisch vorteilhafte Ausgestaltung der axialen Freistellung dar.

Vorzugsweise sind beide axiale Freistellungen als zueinander konzentrische Freidrehungen, insbesondere als zueinander konzentrische Ringnuten, ausgebildet.

Gemäß einer Weiterbildung der Erfindung ist vorgesehen, dass die wenigstens eine Schweißfläche eine Bodenfläche der wenigstens einen axialen Freistellung ist. Dies stellt eine besonders einfache, rasch und kostengünstig herstellbare Ausgestaltung der Schweißfläche dar, wobei keine komplexe Geometrie innerhalb der axialen Freistellung gegeben ist. Insbesondere kann die Schweißfläche als Nutgrund einer als Ringnut ausgebildeten axialen Freistellung ausgebildet sein.

Gemäß einer Weiterbildung der Erfindung ist vorgesehen, dass in der wenigstens einen axialen Freistellung einander berührende und axial miteinander fluchtende Schweißerhebungen des Trennrings einerseits und des Innenkerns andererseits, und/oder des Trennrings einerseits und des Außenkerns andererseits, angeordnet sind, wobei die Schweißerhebungen - insbesondere gemeinsam - die Schweißfläche bilden. Auf diese Weise kann eine detaillierte, auf die konkreten Erfordernisse des Ventils abgestimmte Schweißgeometrie bereitgestellt werden, die insbesondere ein Schweißen mit stark reduzierter Energiezufuhr - beispielsweise mittels Laserstrahl - erlaubt, wobei sehr genau und definiert geschweißt werden kann. Dabei führt die insoweit stark reduzierte Energiezufuhr zu einem sehr geringen Wärmeintrag, wodurch ein Wärmeverzug weitestgehend vermieden werden kann. Die Schweißerhebungen erstrecken sich insbesondere ausgehend von einer Bodenfläche der wenigstens einen axialen Freistellung, insbesondere von einem Nutgrund derselben, in axialer Richtung auf den Plattenanker zu. Die Schweißfläche ist dabei relativ zu der Anschlagfläche und vorzugsweise auch relativ zu der Stirnwand des Innenkerns axial zurückgesetzt, allerdings um einen geringeren Betrag als die Bodenfläche der axialen Freistellung, von welcher die Schweißerhebungen abragen. Die Schweißerhebungen weisen vorzugsweise einen radialen Abstand jeweils zu Seitenwandungen der axialen Freistellung auf, sodass sie quasi - in radialer Richtung gesehen - als freistehende Erhebungen von der Bodenfläche der axialen Freistellung abragen.

Gemäß einer Weiterbildung der Erfindung ist vorgesehen, dass der Außenkern, insbesondere der Innenbund des Außenkerns, und der Innenkern jeweils einen radialen Vorsprung aufweisen, wobei der zwischen dem Außenkern und dem Innenkern angeordnete Trennring mit einer Rückfläche an den radialen Vorsprüngen anschlägt. Insbesondere weist der Außenkern einen ersten radialen Vorsprung auf, der sich - bevorzugt ausgehend von dem Innenbund - in radialer Richtung nach innen in Richtung des Innenkerns erstreckt. Der Innenkern weist einen zweiten radialen Vorsprung auf, der sich in radialer Richtung auswärts - vorzugsweise in Richtung auf den Innenbund des Außenkerns - erstreckt. Vorzugsweise sind die radialen Vorsprünge - in radialer Richtung gesehen - voneinander beabstandet, sie berühren sich also insbesondere nicht. Die radialen Vorsprünge fluchten bevorzugt in axialer Richtung gesehen miteinander.

Wenigstens einer der beiden radialen Vorsprünge ist bevorzugt - in Umfangsrichtung gesehen - umlaufend ausgebildet. Bevorzugt sind beide radialen Vorsprünge in Umfangsrichtung umlaufend ausgebildet. Insbesondere ist es möglich, dass wenigstens einer der beiden radialen Vorsprünge als umlaufende Schulter ausgebildet ist. Vorzugsweise sind beide radialen Vorsprünge als umlaufende Schultern ausgebildet.

Dadurch, dass sich der Trennring an den radialen Vorsprüngen des Außenkerns einerseits und des Innenkerns andererseits abstützt, weist dieser und damit auch insgesamt das Ventil eine erhöhte Druckstabilität auf, sodass es bevorzugt für Hochdruck-Anwendungen geeignet ist.

Unter einer Rückfläche des Trennrings wird eine Fläche verstanden, auf welcher die Mittenachse schräg, vorzugsweise senkrecht steht, und die der Magnetspule zugewandt ist. Der Trennring wird insbesondere mit seiner Rückfläche an den radialen Vorsprüngen abgestützt. Hierdurch wird eine definierte axiale Lage des Trennrings gewährleistet, sodass dieser sicher und reproduzierbar mit dem Außenkern einerseits und dem Innenkern andererseits verbunden werden kann.

Gemäß einer Weiterbildung der Erfindung ist vorgesehen, dass eine Ringwand des Trennrings einen an den die Anschlagfläche mitbildenden Stirnseitenteil angrenzenden Rücksprung aufweist, dessen Grundfläche bezüglich einer Mittenachse auf Abstand zur Anschlagfläche zurückgesetzt ist, wobei vorzugsweise der Stirnseitenteil der Ringwand des Trennrings radial breiter ist als die Grundfläche des Rücksprungs.

Gemäß einer Weiterbildung der Erfindung ist vorgesehen, dass die axiale Dicke der Ringwand größer ist als die axiale Dicke der Bodenwand.

Gemäß einer Weiterbildung der Erfindung ist vorgesehen, dass die axiale Dicke der Bodenwand des Trennrings gleich dem Abstand der zurückgesetzten Stirnwand des Innenkerns zur Ebene der Anschlagfläche ist.

Gemäß einer Weiterbildung der Erfindung ist vorgesehen, dass die axiale Dicke des Innenbundes des Außenkerns und die axiale Dicke der Ringwand des Trennrings gleich sind.

Weitere Vorteile und wesentliche Einzelheiten der Erfindung sind der nachfolgenden Beschreibung und der Zeichnung zu entnehmen, die in schematischer Darstellung bevorzugte Ausführungsformen als Beispiel zeigt. Es stellen dar:
FIG. 1 ein erstes nicht erfindungsgemäßes Beispiel eines Ventils in einer vergrößerten Darstellung in einer geschnittenen Seitenansicht,
FIG. 2 eine nochmals vergrößerte Darstellung eines Ventildetails der FIG. 1 gemäß einem zweiten nicht erfindungsgemäßen Beispiel,
FIG. 3 ein Ventildetail ähnlich der FIG. 2, jedoch gemäß einem dritten nicht erfindungsgemäßen Beispiel,
FIG. 4 ein Ventildetail gemäß des Ventils, und
FIG. 5 ein Ventildetail eines zweiten erfindungsgemäßen Ausführungsbeispiels des Ventils.

Das in der Zeichnung dargestellte Ventil 100 ist für gasförmige und flüssige Medien vorgesehen. Es ist im Wesentlichen als kreiszylindrischer Körper ausgebildet und besitzt im Wesentlichen einen Ventilkörper 1 und einen mit diesem verbundenen Magnetkopf 2. Im Ventilkörper 1 ist eine Ventilkammer 3 ausgebildet, die von einer Grundwand 4 und einer Umfangswand 5 mitbegrenzt ist. In der Grundwand 4 des Ventilkörpers 1 sind ein bezüglich einer Mittenachse 6 des Ventils koaxial angeordneter Eingang 7 und ein mit der Ventilkammer 3 verbundener Ausgang 8 für das Medium vorgesehen. Die Mündung des zur Ventilkammer 3 führenden Eingangs 7 ist als Ventilsitz 9 ausgeführt.

In der Ventilkammer 3 befindet sich ein axial verlagerbarer Plattenanker 10, der koaxial zur Mittenachse 6 eine Ankerscheibe 11, die von einer Durchgangsbohrung durchsetzt ist, eine scheibenförmige Formfeder 12 und einen aus einem gummielastischen Material bestehenden Dichtbolzen 13 besitzt, die zu einer Baueinheit zusammengefasst sind. Der Dichtbolzen 13 ist an der dem Magnetkopf 2 abgewandten Seite des Plattenankers 10 angeordnet und korrespondiert mit dem Ventilsitz 9. Die Formfeder 12 ist mit ihrem Mittenbereich zwischen der dem Magnetkopf 2 abgewandten Seite der Ankerscheibe 11 und dem Dichtbolzen 13 festgelegt, wobei für einen sicheren Befestigungshalt krallenartig geformte Ausbiegungen in dem Dichtbolzen 13 eingebettet sein können. Der Plattenanker 10 ist mit einer kreisrunden Ringbuchse 14 in der Ventilkammer 3 fixiert.

Der Magnetkopf 2 weist bezüglich der Mittenachse 6 einen rundstabförmigen Innenkern 15 und einen im Wesentlichen rohrförmigen Außenkern 16 auf, der an seinem dem Plattenanker 10 zugewandten Ende einen sich radial in Richtung zum Innenkern 15 erstreckenden Innenbund 17 besitzt. Der Außenkern 16 bildet den Außenmantel des Magnetkopfes 2 und kann einen im Durchmesser etwas reduzierten Umfangsteil 18 aufweisen.

Außerdem gehört zu dem Magnetkopf 2 eine Elektrospule 19, die auf einem mindestens einen Stirnflansch 20 besitzenden Spulenkörper 21 gelagert ist und sich mit diesem in einem von dem Innenkern 15 und dem Außenkern 16 begrenzten Ringraum des Magnetkopfes 2 befindet. Zur Abdichtung kann eine isolierende Vergussmasse 22 vorgesehen sein, in der die Elektrospule 19 und der Spulenkörper 21 im Magnetkopf 2 dicht eingebettet sind und die auch die Leiteranschlussteile 23, 24 der Elektrospule 19 dicht umschließt.

An der dem Plattenanker 10 zugewandten Unterseite des Magnetkopfes 2 ist ein kreisförmiger Trennring 25 koaxial angeordnet, der eine Ringwand 26 aufweist und aus einem nicht magnetisierbaren Werkstoff, vorzugsweise einem rostfreien Edelstahl, hergestellt ist. Dieser Trennring 25 ist in der Ebene des dem Außenkern 16 zugehörigen Innenbundes 17 zwischen diesem und dem Innenkern 15 positioniert, wobei die äußere Umfangsfläche der Ringwand 26 fest an einer Wandfläche des Innenbundes 17 anliegt und eine Innenfläche der Ringwand 26 mit der Außenfläche des Innenkerns 15 korrespondiert. Der Trennring 25 ist zwischen dem Innenbund 17 des Außenkerns 16 und dem Innenkern 15 bevorzugt mittels Presssitz oder durch Verschweißung hermetisch dicht positioniert, sodass das Medium auch bei hohem Betriebsdruck nicht in den Magnetkopf 2 eindringen kann.

Der Zeichnung ist zu entnehmen, dass der Stirnflansch 20 des Spulenkörpers 21 an der dem Plattenanker 10 abgewandten Seite des Innenbundes 17 sowie des Trennrings 25 an letzteren anliegt bzw. abgestützt ist. An der dem Plattenanker 10 zugewandten Seite sind die Stirnfläche 27 des Innenbundes 17 und ein Stirnseitenteil 28 des Trennrings 25 als in ein und derselben Ebene liegende Anschlagfläche 29 ausgebildet, an der die dem Magnetkopf 2 zugewandte Oberseite der Ankerscheibe 11 zur Anlage gelangt. Die der Ankerscheibe 11 zugewandte Stirnwand 30 des Innenkerns 15 ist axial zurückgesetzt, sodass zwischen der Stirnwand 30 und der Ebene der Anschlagfläche 29 für eine gewisse Reduzierung der magnetischen Haltekraft im Bereich des Innenkerns 15 ein Abstand bzw. Spalt besteht. Im Übrigen ist zu erkennen, dass die axiale Dicke der Ringwand 26 des Trennrings 25 im Wesentlichen gleich der axialen Dicke des Innenbundes 17 ist.

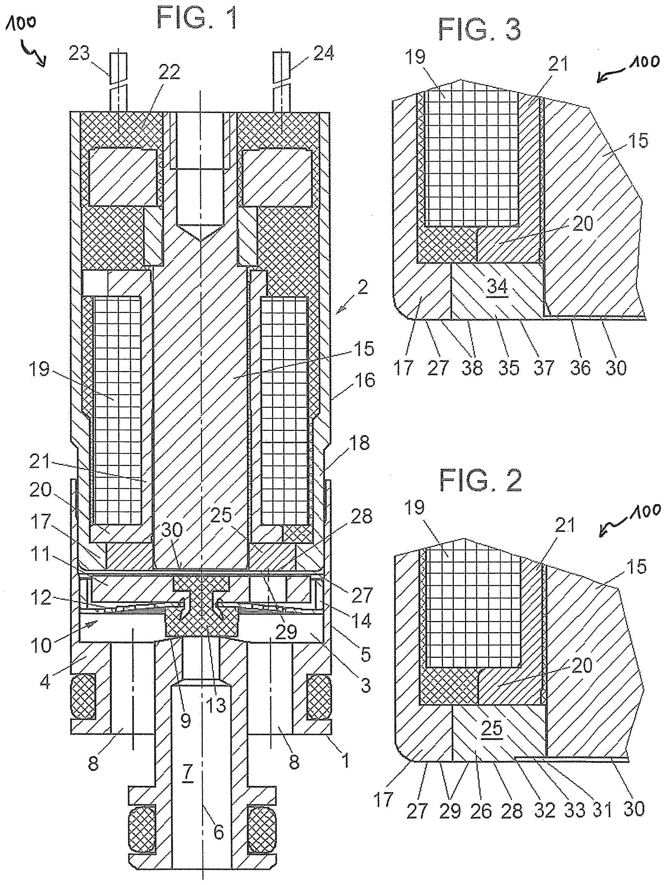

Der FIG. 2 ist zu entnehmen, dass bei diesem Beispiel in der Ringwand 26 des Trennrings 25 ein Rücksprung 31 ausgebildet ist, der von einer Ringfläche 32 umfänglich begrenzt ist und dessen Grundfläche 33 axial auf Abstand zur Anschlagfläche 29 zurückgesetzt ist. Dabei ist zu erkennen, dass die Ringfläche 32 des Rücksprungs 31 radial so weit in Richtung zur Mittenachse 6 versetzt ist, dass die radiale Erstreckung des Stirnseitenteils 28 der Ringwand 26 größer ist als die radiale Erstreckung der Grundfläche 33 des Rücksprungs 31. Somit ist die der Anschlagfläche 29 zugehörige Fläche des Stirnseitenteils 28 vorteilhaft größer als die zurückgesetzte Grundfläche 33 des Rücksprungs 31.

Die FIG. 3 zeigt, dass bei diesem Beispiel der Trennring 34 so gestaltet ist, dass er mit der Ringwand 35 und einer Bodenwand 36 im Wesentlichen topfförmig ist. In diesem Topf ist das dem Plattenanker 10 zugewandte Ende des Innenkerns 15 vorzugsweise formschlüssig gelagert, wobei die Stirnwand 30 des Innenkerns 15 bevorzugt an der Bodenwand 36 anliegt. Die Ringwand 35 und die Bodenwand 36 sind dabei bevorzugt einstückig und bestehen aus ein und demselben Material. Dabei ist zu erkennen, dass die in der Zeichnung untere Fläche der Bodenwand 36 des Trennrings 35, die der Ankerscheibe 11 zugewandt ist, sowie die Stirnfläche 27 des Außenkerns 16 und der Stirnseitenteil 37 des topfförmigen Trennrings 34 in ein und derselben Ebene ausgebildet sind und gemeinsam die verhältnismäßig große Anschlagfläche 38 bilden. Die Dicke der Bodenwand 36 in axialer Richtung ist deutlich bzw. ein Mehrfaches dünner als die axiale Dicke der Ringwand 35, wobei es außerdem vorteilhaft ist, die axiale Dicke der Bodenwand 36 des Trennrings 35 so auszuführen, dass sie im Wesentlichen dem Maß des Abstands entspricht, um das die Stirnwand 30 des Innenkerns 15 bezüglich der Ebene der Anschlagfläche 38 axial zurückgesetzt ist.

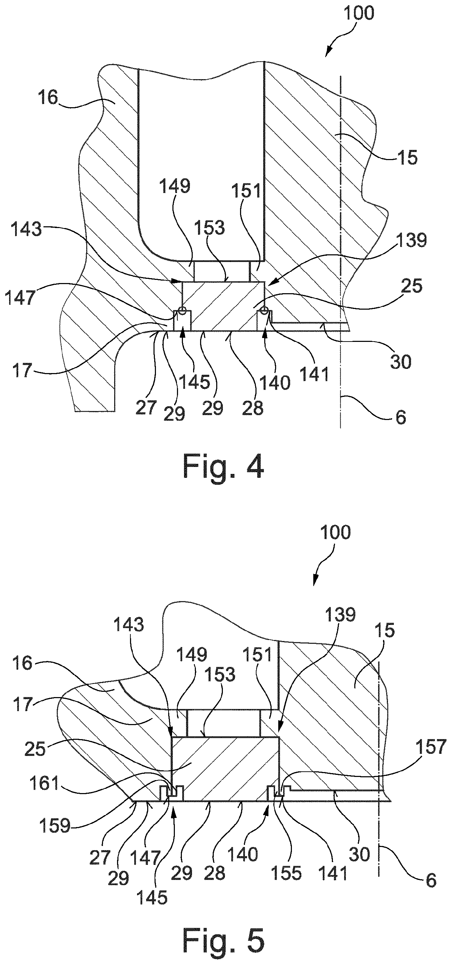

FIG. 4 zeigt eine Detaildarstellung eines Ausführungsbeispiels des Ventils 100. Gleiche und funktionsgleiche Elemente sind mit gleichen Bezugszeichen versehen, sodass insofern auf die vorangegangene Beschreibung verwiesen wird. Bei dem hier dargestellten Ausführungsbeispiel ist in einem ersten Berührungsbereich 139 zwischen dem Trennring 25 und dem Innenkern 15 eine erste axiale Freistellung 140 ausgebildet, die eine relativ zu der Anschlagfläche 29 und hier auch relativ zu der Stirnwand 30 des Innenkerns 15 entlang der Mittenachse 6 gesehen zurückgesetzte erste Schweißfläche 141 aufweist.

In einem zweiten Berührungsbereich 143 zwischen dem Trennring 25 und dem Außenkern 16, insbesondere zwischen dem Trennring 25 und dem Innenbund 17 des Außenkerns 16, ist eine zweite axiale Freistellung 145 ausgebildet, die eine relativ zu der Anschlagfläche 29 und hier auch relativ zu der Stirnwand 30 entlang der Mittenachse 6 gesehen zurückgesetzte zweite Schweißfläche 147 aufweist.

Die axialen Freistellungen 140, 145 sind hier als Freidrehung, insbesondere als konzentrische Ringnuten, ausgebildet, die sich insbesondere konzentrisch zu der Mittenachse 6 und konzentrisch zueinander - in Umfangsrichtung gesehen - erstrecken.

Die Schweißflächen 141, 147 sind bei dem Ausführungsbeispiel gemäß Figur 4 jeweils als Bodenflächen der entsprechenden axialen Freistellung 140, 145 ausgebildet.

Der Innenbund 17 weist hier einen ersten radialen Vorsprung 149 auf, der sich ausgehend von dem Innenbund 17 in radialer Richtung gesehen zu dem Innenkern 15 hin erstreckt. Der Innenkern 15 weist seinerseits einen zweiten radialen Vorsprung 151 auf, der sich ausgehend von dem Innenkern 15 in radialer Richtung gesehen zu dem Innenbund 17 hin erstreckt. Der Trennring 25 ist zwischen dem Innenbund 17 und dem Innenkern 15 angeordnet und weist eine Rückfläche 153 auf, mit welcher er an den radialen Vorsprüngen 149, 151 anschlägt, insbesondere abgestützt ist.

Die radialen Vorsprünge 149, 151 sind bevorzugt - in Umfangsrichtung gesehen - umlaufend ausgebildet. Besonders bevorzugt sind sie als Schultern ausgebildet, die - in Umfangsrichtung gesehen - umlaufen.

Dadurch, dass sich der Trennring 25 an den radialen Vorsprüngen 149, 151 abstützt, können in den Trennring 25 eingeleitete Druckkräfte einerseits durch den Außenkern 16 und andererseits durch den Innenkern 15 abgestützt werden. Dadurch ist das Ventil 100 insgesamt insbesondere auch für Hochdruck-Anwendungen geeignet.

Der Trennring 25 ist im Bereich der Schweißflächen 141, 147 einerseits mit dem Innenkern 15 und andererseits mit dem Außenkern 16, insbesondere mit dem Innenbund 17, verschweißt, vorzugsweise laserverschweißt.

Dadurch, dass die Schweißverbindung relativ zu der Anschlagfläche 29 axial zurückgesetzt angeordnet ist, bedarf es nach der Schweißung, die im Übrigen mit hoher Präzision durchgeführt werden kann, keinerlei Nachbearbeitung der Anschlagfläche 29.

FIG. 5 zeigt eine Detaildarstellung eines zweiten Ausführungsbeispiels des Ventils 100. Gleiche und funktionsgleiche Elemente sind mit gleichen Bezugszeichen versehen, sodass insofern auf die vorangegangene Beschreibung verwiesen wird. Bei dem hier dargestellten Ausführungsbeispiel sind in den axialen Freistellungen 140, 145 axial miteinander fluchtende Schweißerhebungen 155, 157, 159, 161 angeordnet, nämlich in der ersten axialen Freistellung 140 eine erste Schweißerhebung 155 des Trennrings 25 und eine zweite Schweißerhebung 157 des Innenkerns 15, und in der zweiten axialen Freistellung 145 eine dritte Schweißerhebung 159 des Außenkerns 16, hier des Innenbunds 17, und eine vierte Schweißerhebung 161 des Trennrings 25. Die Schweißflächen 141, 147 sind dabei an den Schweißerhebungen 155, 157, 159, 161 und insbesondere durch die Schweißerhebungen 155, 157, 159, 161 gebildet, insbesondere als axiale Stirnflächen der Schweißerhebungen 155, 157, 159, 161.

Hierdurch ist eine detaillierte Schweißgeometrie geschaffen, die eine besonders präzise, definierte Schweißung mit geringem Wärmeeintrag, vorzugsweise durch Laserschweißen, erlaubt.

Da die mit der Ankerplatte 11 korrespondierende Anschlagfläche 29, 38 des hier vorgeschlagenen Ventils 100 relativ groß ist, ist der mechanische Verschleiß an den Berührungs- bzw. Anlageflächen ausgesprochen gering, sodass bei weitgehender Einsparung aufwendiger Schutzschichten oder Oberflächen-Härtungsprozesse selbst bei hoher Schalthäufigkeit des Ventils 100 eine dauerhaft zuverlässige Funktionstüchtigkeit erreicht wird.

## Patentansprüche

1. Ventil (100) für gasförmige und flüssige Medien, umfassend einen Ventilkörper (1) mit einem Eingang (7), einem Ausgang (8), einer Ventilkammer (3) und einem Ventilsitz (9), einen Plattenanker (10) mit einer Ankerscheibe (11) einem Dichtbolzen (13) und einer Feder (12), und einen Magnetkopf (2) mit einer Elektrospule (19), einem Innenkern (15), einem Außenkern (16) und einem zwischen letzteren angeordneten nicht magnetisierbaren Trennring (25, 34), wobei eine mit der Ankerscheibe (11) des Plattenankers (10) korrespondierende Stirnfläche (27) des Außenkerns (16) und ein der Ankerscheibe (11) zugewandter Stirnseitenteil (28) des Trennrings (25,34) in ein und derselben Ebene als Anschlagfläche (29, 38) ausgebildet sind, **dadurch gekennzeichnet, dass**
a) in einem Berührungsbereich (139, 143) zwischen dem Trennring (25) und dem Innenkern (15) eine axiale Freistellung (140, 145) ausgebildet ist, die eine relativ zu der Anschlagfläche (29) axial zurückgesetzte Schweißfläche (141, 147) und eine Bodenfläche aufweist, wobei die Bodenfläche relativ zu der Anschlagfläche (29) und relativ zu einer Stirnwand (30) des Innenkerns (15) axial zurückgesetzt ist, und/oder dass
b) in einem Berührungsbereich (139, 143) zwischen dem Trennring (25) und dem Außenkern (16) eine axiale Freistellung (140, 145) ausgebildet ist, die eine relativ zu der Anschlagfläche (29) axial zurückgesetzte Schweißfläche (141, 147) aufweist.

2. Ventil (100) nach vorstehendem Anspruch, **dadurch gekennzeichnet, dass** eine Ringwand (26) des Trennrings (25) einen an den die Anschlagfläche (29) mitbildenden Stirnseitenteil (28) angrenzenden Rücksprung (31) aufweist, dessen Grundfläche (33) bezüglich einer Mittenachse (6) auf Abstand zur Anschlagfläche (29) zurückgesetzt ist.

3. Ventil (100) nach Anspruch 2, **dadurch gekennzeichnet, dass** der die Anschlagfläche (29) mitbildende Stirnseitenteil (28) der Ringwand (26) des Trennrings (25) größer ist als die Grundfläche (33) des Rücksprungs (31).

4. Ventil (100) nach einem oder mehreren der vorstehenden Ansprüche 2 und 3, **dadurch gekennzeichnet, dass** die radiale Erstreckung des Stirnseitenteils (28) der Ringwand (26) des Trennrings (25) größer ist als die radiale Erstreckung der Grundfläche (33) des Rücksprungs (31).

5. Ventil (100) nach einem oder mehreren der vorstehenden Ansprüche, **dadurch gekennzeichnet, dass** die der Ankerscheibe (11) zugewandte Stirnwand (30) des Innenkerns (15) auf Abstand zur Ebene der Anschlagfläche (29, 38) zurückgesetzt ist.

6. Ventil (100) nach einem oder mehreren der vorstehenden Ansprüche, **dadurch gekennzeichnet, dass** der Trennring (34) mit einer Ringwand (35) und einer Bodenwand (36) topfförmig ausgebildet ist

7. Ventil (100) nach Anspruch 6, **dadurch gekennzeichnet, dass** die der Ankerscheibe (11) zugewandte Fläche der Bodenwand (36) des Trennrings (34) mit der Stirnfläche (27) des Außenkerns (16) und dem Stirnseitenteil (37) des Trennrings (34) in ein und derselben Ebene angeordnet sind und die Anschlagfläche (38) bilden.

8. Ventil (100) nach einem oder mehreren der vorstehenden Ansprüche, **dadurch gekennzeichnet, dass** der zylinderförmige Außenkern (16) einen radial in Richtung zum Innenkern (15) gerichteten Innenbund (17) aufweist, an dem die die Anschlagfläche (29, 38) mitbildende Stirnfläche (27) ausgebildet ist.

9. Ventil (100) nach einem oder mehreren der vorstehenden Ansprüche, **dadurch gekennzeichnet, dass** der Trennring (25, 34) zwischen dem Außenkern (16) und dem Innenkern (15) hermetisch dicht eingepresst und/oder verschweißt ist.

10. Ventil (100) nach einem oder mehreren der vorstehenden Ansprüche , **dadurch gekennzeichnet, dass** die wenigstens eine axiale Freistellung (140, 145) als Freidrehung und/oder als vorzugsweise konzentrische Ringnut ausgebildet ist.

11. Ventil (100) nach einem oder mehreren der vorstehenden der Ansprüche, **dadurch gekennzeichnet, dass** die wenigstens eine Schweißfläche (141, 147) eine Bodenfläche der wenigstens einen axialen Freistellung (140, 145) ist.

12. Ventil (100) nach einem oder mehreren der vorstehenden der Ansprüche, **dadurch gekennzeichnet, dass** in der wenigstens einen axialen Freistellung (140, 145) einander berührende und axial miteinander fluchtende Schweißerhebungen (155, 157; 159, 161)
a) des Trennrings (25) und des Innenkerns (15), und/oder
b) des Trennrings (25) und des Außenkerns (16)
angeordnet sind, wobei die Schweißerhebungen (155, 157; 159, 161) die wenigstens eine Schweißfläche (141, 147) bilden.

13. Ventil (100) nach einem oder mehreren der vorstehenden der Ansprüche, **dadurch gekennzeichnet, dass** der Außenkern (16) und der Innenkern (15) jeweils einen radialen Vorsprung (149, 151) aufweisen, wobei der zwischen dem Außenkern (16) und dem Innenkern (15) angeordnete Trennring (25) mit einer Rückfläche (153) an den radialen Vorsprüngen (149, 151) anschlägt.

14. Ventil (100) nach einem oder mehreren der vorstehenden Ansprüche, **dadurch gekennzeichnet, dass** der Trennring (25, 34) materialeinheitlich einstückig ausgeführt ist.

15. Ventil (100) nach einem oder mehreren der vorstehenden Ansprüche 8 bis 14, **dadurch gekennzeichnet, dass** an der der Anschlagfläche (29, 38) abgewandten Seite des Innenbundes (17) des Außenkerns (16) und/oder der Ringwand (26, 35) des Trennrings (25, 34) ein die Elektrospule (19) tragender Spulenkörper (21) anliegt.

## Claims

1. A valve (100) for gaseous and liquid media, comprising a valve body (1) with an inlet (7), an outlet (8), a valve chamber (3) and a valve seat (9), a plate anchor (10) with an armature disc (11), a sealing pin (13) and a spring (12), and a magnetic head (2) with an electronic coil (19), an inner core (15), an outer core (16), and a nonmagnetizable dividing ring (25, 34) arranged between the latter, wherein a front face (27) of the outer core (16) corresponding with the armature disc (11) of the plate anchor (10) and an end face part (28) of the dividing ring (25,34) facing the armature disc (11) are configured as stop surface (29, 38) in one and the same plane, **characterized in that**
a) in a contact area (139, 143) between the dividing ring (25) and the inner core (15) an axial clearance (140, 145) is formed which has a welding surface (141, 147) that is axially recessed relative to the stop surface (29) and the bottom surface, wherein the bottom surface is axially recessed relative to the stop surface (29) and relative to an end wall (30) of the inner core (15), and/or **in that**
b) in a contact area (139, 143) between the dividing ring (25) and the outer core (16) an axial clearance (140, 145) is formed which has a welding surface (141, 147) that is axially recessed relative to the stop surface (29).

2. The valve (100) according to the preceding claim, **characterized in that** an annular wall (26) of the dividing ring (25) has a recess (31) adjoining the end face part (28) also forming a stop surface (29) whose base surface (33) is set back from the stop surface (29) with respect to a center axis (6).

3. The valve (100) according claim 2, **characterized in that** the end face part (28) of the annular wall (26) of the dividing ring (25) also forming the stop surface (29) is greater than the base surface (33) of the recess (31).

4. The valve (100) according to one or more of the preceding claims 2 and 3, **characterized in that** the radial extension of the end face part (28) of the annular wall (26) of the dividing ring (25) is greater than the radial extension of the base surface (33) of the recess (31).

5. The valve (100) according to one or more of the preceding claims, **characterized in that** the end wall (30) of the inner core (15) facing the armature disc (11) is set back at a distance to the plane of the stop surface (29, 38).

6. The valve (100) according to one or more of the preceding claims, **characterized in that** the dividing ring (34) with an annular wall (35) and a bottom wall (36) is configured in a pot-shaped manner.

7. The valve (100) according to claim 6, **characterized in that** the surface of the bottom wall (36) of the dividing ring (34) facing the armature disc (11) is arranged with the front face (27) of the outer core (16) and the end face part (37) of the dividing ring (34) in one and the same plane and form the stop surface (38).

8. The valve (100) according to one or more of the preceding claims, **characterized in that** the cylindrical outer core (16) has, radially in the direction of the inner core (15), an inner collar (17) on which the front face (27) also forming the stop surface (29, 38) is formed.

9. The valve (100) according to one or more of the preceding claims, **characterized in that** the dividing ring (25, 34) is hermetically pressed and/or welded between the outer core (16) and the inner core (15).

10. The valve (100) according to one or more of the preceding claims, **characterized in that** the at least one axial clearance (140, 145) is configured as an undercut and/or as a preferably concentric annular groove.

11. The valve (100) according to one or more of the preceding claims, **characterized in that** the at least one welding surface (141, 147) is a bottom surface of the at least one axial clearance (140, 145).

12. The valve (100) according to one or more of the preceding claims, **characterized in that** in the at least one axial clearance (140, 145) weld projections (155, 157; 159, 161)
a) of the dividing ring (25) and the inner core (15), and/or
b) of the dividing ring (25) and the outer core (16)
are arranged that touch each other and are axially aligned with each other, wherein the weld projections (155, 157; 159, 161) forming the at least one weld surface (141, 147).

13. The valve (100) according to one or more of the preceding claims, **characterized in that** the outer core (16) and the inner core (15) each have a radial projection (149, 151), wherein the dividing ring (25) arranged between the outer core (16) and the inner core (15) abuts the radial protrusions (149, 151) with a rear surface (153).

14. The valve (100) according to one or more of the preceding claims, **characterized in that** the dividing ring (25, 34) is made of one piece and one type of material.

15. The valve (100) according to one or more of the preceding claims 8 to 14, **characterized in that** a bobbin (21) holding the electronic coil (19) abuts the side of the inner collar (17) of the outer core (16) facing away from the stop surface (29, 38) and/or the annular wall (26, 35) of the dividing ring (25, 34).

## Revendications

1. Vanne (100) pour milieux gazeux et liquides, comprenant un corps de vanne (1) avec une entrée (7), une sortie (8), une chambre de vanne (3) et un siège de vanne (9), une armature plate (10) avec un disque d'armature (11), un boulon d'étanchéité (13) et un ressort (12), et comprenant une tête magnétique (2) avec une bobine électrique (19), un noyau intérieur (15), un noyau extérieur (16) et une bague de séparation non magnétisable (25, 34) disposée entre ces derniers, une surface frontale (27) du noyau extérieur (16) correspondant au disque d'armature (11) de l'armature plate (10) et une partie de face frontale (28) de la bague de séparation (25, 34) tournée vers le disque d'armature (11) étant réalisées dans un seul et même plan en tant que surface de butée (29, 38), **caractérisée en ce que**
a) un dégagement axial (140, 145) est formé dans une zone de contact (139, 143) entre la bague de séparation (25) et le noyau intérieur (15), lequel dégagement présente une surface de soudure (141, 147) axialement en retrait par rapport à la surface de butée (29) et une surface de fond, la surface de fond étant axialement en retrait par rapport à la surface de butée (29) et par rapport à une paroi frontale (30) du noyau intérieur (15), et/ou que
b) un dégagement axial (140, 145) est formé dans une zone de contact (139, 143) entre la bague de séparation (25) et le noyau extérieur (16), lequel dégagement présente une surface de soudure (141, 147) axialement en retrait par rapport à la surface de butée (29).

2. Vanne (100) selon la revendication précédente, **caractérisée en ce qu'**une paroi annulaire (26) de la bague de séparation (25) présente un renfoncement (31) qui est adjacent à la partie de face frontale (28) formant une partie de la surface de butée (29) et dont la surface de base (33) est en retrait à distance par rapport à la surface de butée (29) suivant un axe central (6).

3. Vanne (100) selon la revendication 2, **caractérisée en ce que** la partie de face frontale (28) de la paroi annulaire (26) de la bague de séparation (25) qui forme une partie de la face de butée (29) est plus grande que la surface de base (33) du renfoncement (31).

4. Vanne (100) selon l'une ou plusieurs des revendications précédentes 2 et 3, **caractérisée en ce que** l'extension radiale de la partie de face frontale (28) de la paroi annulaire (26) de la bague de séparation (25) est supérieure à l'extension radiale de la surface de base (33) du renfoncement (31).

5. Vanne (100) selon l'une ou plusieurs des revendications précédentes, **caractérisée en ce que** la paroi frontale (30) du noyau intérieur (15) tournée vers le disque d'armature (11) est en retrait à distance par rapport au plan de la surface de butée (29, 38).

6. Vanne (100) selon l'une ou plusieurs des revendications précédentes, **caractérisée en ce que** la bague de séparation (34) est en forme de pot avec une paroi annulaire (35) et une paroi de fond (36).

7. Vanne (100) selon la revendication 6, **caractérisée en ce que** la surface de la paroi de fond (36) de la bague de séparation (34) tournée vers le disque d'armature (11), la surface frontale (27) du noyau extérieur (16) et la partie de face frontale (37) de la bague de séparation (34) sont disposées dans un seul et même plan et forment la surface de butée (38).

8. Vanne (100) selon l'une ou plusieurs des revendications précédentes, **caractérisée en ce que** le noyau extérieur cylindrique (16) présente un collet intérieur (17) dirigé radialement vers le noyau intérieur (15), sur lequel est formée la face frontale (27) formant une partie de la surface de butée (29, 38).

9. Vanne (100) selon l'une ou plusieurs des revendications précédentes, **caractérisée en ce que** la bague de séparation (25, 34) est pressée et/ou soudée hermétiquement entre le noyau extérieur (16) et le noyau intérieur (15).

10. Vanne (100) selon l'une ou plusieurs des revendications précédentes, **caractérisée en ce que** ledit au moins un dégagement axial (140, 145) est réalisé sous la forme d'une partie dégagée au tour et/ou d'une rainure annulaire de préférence concentrique.

11. Vanne (100) selon l'une ou plusieurs des revendications précédentes, **caractérisée en ce que** ladite au moins une surface de soudure (141, 147) est une surface de fond dudit au moins un dégagement axial (140, 145).

12. Vanne (100) selon l'une ou plusieurs des revendications précédentes, **caractérisée en ce que** dans ledit au moins un dégagement axial (140, 145) sont disposées des surélévations de soudage (155, 157 ; 159, 161) en contact mutuel et alignées axialement de
a) la bague de séparation (25) et du noyau intérieur (15), et/ou
b) de la bague de séparation (25) et du noyau extérieur (16),
les surélévations de soudage (155, 157 ; 159, 161) formant ladite au moins une surface de soudage (141, 147).

13. Vanne (100) selon l'une ou plusieurs des revendications précédentes, **caractérisée en ce que** le noyau extérieur (16) et le noyau intérieur (15) présentent chacun une saillie radiale (149, 151), la bague de séparation (25) disposée entre le noyau extérieur (16) et le noyau intérieur (15) venant en butée par une surface arrière (153) contre les saillies radiales (149, 151).

14. Vanne (100) selon l'une ou plusieurs des revendications précédentes, **caractérisée en ce que** la bague de séparation (25, 34) est réalisée en une seule pièce dans un même matériau.

15. Vanne (100) selon l'une ou plusieurs des revendications précédentes 8 à 14, **caractérisée en ce qu'**un corps de bobine (21) portant la bobine électrique (19) s'appuie sur le côté du collet intérieur (17) du noyau extérieur (16) opposé à la surface de butée (29, 38) et/ou sur la paroi annulaire (26, 35) de la bague de séparation (25, 34).
